# EUROPEAN PATENT APPLICATION

(11) **EP 2 848 642 A1**
(43) Date of publication of application: **18.03.2015**
(21) Application number: 13787840.1
(22) Date of filing: 02.05.2013
(51) Int. Cl.: C08J 5/18

(54) **RUBBER SHEET, PNEUMATIC TIRE USING SAME, AND METHOD FOR PRODUCING RUBBER SHEET**

(30) Priority: 08.05.2012 JP 2012106917; 08.05.2012 JP 2012106918
(71) Applicant: Bridgestone Corporation, Tokyo 104-8340 (JP)
(72) Inventor: KITANO, Hideki, Tokyo 187-8531 (JP); CHIASHI, Hideyuki, Tokyo 187-8541 (JP); AMAMOTO, Tetsuo, Tokyo 187-8531 (JP)
(74) Representative: Bublak, Wolfgang
(86) International application number: PCT/JP2013/062770
(87) International publication number: WO 2013/168676

(57) **Abstract**

The present invention provides a rubber sheet having a thickness of 500 µm or less, wherein a rubber component in a rubber composition to constitute the rubber sheet contains a liquid elastomer having a weight-average molecular weight of from 500 to 100000, and a method for producing a rubber sheet having a thickness of 500 µm or less, which includes a step (A) of forming a film of a rubber composition not containing an organic compound having a boiling point not higher than 150°C, on a substrate sheet at a temperature at which the viscosity of the rubber composition falls within a range of from 10 to 100000 mPa·s. Using the specific liquid elastomer, the present invention provides a rubber sheet having a thickness of 500 µm or less. Not using any special coating apparatus, the present invention provides a method for producing a rubber sheet of a rubber composition not containing an organic compound having a boiling point not higher than 150°C.

## Description

### TECHNICAL FIELD

The present invention relates to a thin-film rubber sheet and a pneumatic tire using it, and to a method for producing a rubber sheet, in particular to a method for producing a thin-film rubber adhesive sheet.

### BACKGROUND ART

Recently, weight saving of pneumatic tires is required, and thinning of rubber sheets that are tire members is considered to be important. However, there are limitations to thinning of rubber sheets according to production methods using an extruder or a calender roll that have heretofore been used widely in the art.

As a method of obtaining a thin-film rubber sheet, there is known a method of forming a film from a rubber solution dissolved in a solvent through solvent casting film formation. However, the method is problematic in point of generation of volatile organic compounds (VOC) caused by the solvent.

As opposed to this, PTL 1 proposes a method for producing a rubber/thermoplastic resin laminate, in which a solvent-free adhesive composition is applied onto a thermoplastic resin film or sheet in a thickness of 100 µm or less, using a coating apparatus having a gear pump mechanism where two gears engage with each other, and then this is laminated with a rubber composition and adhered thereto through vulcanization. However, since the adhesive composition is applied using a special coating apparatus, and therefore the practical use of the method is limited.

On the other hand, PTL 2 discloses a composite of a rubber sheet and a resin film, which, however, uses an organic solvent such as toluene, etc.

### Citation List

### Patent Literature

PTL 1: JP-A 11-10779
PTL 2: JP-A 2008-120093

### SUMMARY OF INVENTION

### TECHNICAL PROBLEM

An object of the present invention is to provide a rubber sheet having a thickness of 500 µm or less using a specific liquid elastomer, and to provide a method for producing a rubber sheet of a rubber composition not containing an organic compound having a boiling point not higher than 150°C, without using any special coating apparatus.

### SOLUTION TO PROBLEM

For solving the above-mentioned problems, the present inventors have made various experimental analyses and, as a result, have found that the problems can be solved by using a liquid elastomer having a specific weight-average molecular weight and by forming a specific rubber composition into a film at a temperature at which the viscosity of the composition could fall within a specific range, and have completed the present invention.

That is, the present invention provides:
[1] A rubber sheet having a thickness of 500 µm or less, wherein a rubber component in a rubber composition to constitute the rubber sheet contains a liquid elastomer having a weight-average molecular weight of from 500 to 100000,
[2] A composite of a resin film and a rubber member, wherein the rubber sheet of the above [1] is arranged between the resin film and the rubber member,
[3] A pneumatic tire having the composite of a resin film and a rubber member of the above [2], and
[4] A method for producing a rubber sheet having a thickness of 500 µm or less, which includes a step (A) of forming a film of a rubber composition not containing an organic compound having a boiling point not higher than 150°C, on a substrate sheet at a temperature at which the viscosity of the rubber composition falls within a range of from 10 to 100000 mPa·s.

### ADVANTAGEOUS EFFECTS OF INVENTION

According to the present invention, there is provided a rubber sheet having a thickness of 500 µm or less, using a specific liquid elastomer.

There is also provided a method for producing a rubber sheet of a rubber composition not containing an organic compound having a boiling point not higher than 150°C, without using any special coating apparatus.

### DESCRIPTION OF EMBODIMENTS

The rubber sheet of the present invention is a rubber sheet having a thickness of 500 µm or less, wherein a rubber component in a rubber composition to constitute the rubber sheet contains a liquid elastomer having a weight-average molecular weight of from 500 to 100000.

When the liquid elastomer has a weight-average molecular weight of from 500 to 100000, then the viscosity of the rubber composition can be controlled to fall within a range of from 10 to 100000 mPa·s. From the viewpoint of controlling the viscosity of the rubber composition to fall within a narrower range, the weight-average molecular weight of the liquid elastomer is more preferably from 1000 to 100000, even more preferably from 1000 to 70000, still more preferably from 2000 to 50000.

Preferably, the rubber composition contains the liquid elastomer in an amount of from 10 to 90% by mass, more preferably from 20 to 90% by mass, even more preferably from 30 to 90% by mass.

The weight-average molecular weight is a standard polystyrene-equivalent value, as determined according to GPC (gel permeation chromatography). The viscosity of the rubber composition is measured according to JIS K 7117-2:1999.

Preferably, the liquid elastomer is a dienic liquid elastomer. This is because the elastomer can enjoy good covulcanization with various tire members of dienic rubber compositions, therefore providing good adhesiveness to tire members.

From this viewpoint, as the dienic liquid elastomer, preferably mentioned are a liquid styrene-butadiene random copolymer, a liquid styrene-butadiene block copolymer, a liquid polybutadiene, a liquid polyisoprene, a depolymerized natural rubber, etc.

The rubber composition to constitute the rubber sheet of the present invention may contain, as the rubber component therein, a dienic rubber in addition to the above-mentioned liquid elastomer.

The dienic rubber includes a natural rubber, an epoxidated natural rubber, a polyisoprene rubber, a polybutadiene rubber, a styrene-butadiene copolymer rubber, a styrene-isoprene copolymer rubber, an ethylene-butadiene copolymer, a propylene-butadiene copolymer, etc.

In the rubber composition to constitute the rubber sheet of the present invention, the content of an organic compound having a boiling point not higher than 150°C is preferably 5% by mass or less, and more preferably, the content is 0% by mass.

The organic compound having a boiling point not higher than 150°C includes an organic solvent having a boiling point not higher than 150°C. In the rubber composition, the content of an organic compound having a boiling point not higher than 150°C of 5% by mass or less is preferred since generation of volatile organic compounds (VOC) can be prevented.

The thickness of the rubber sheet of the present invention is preferably from 1 to 500 µm, more preferably from 5 to 500 µm, even more preferably from 5 to 400 µm, still more preferably from 10 to 200 µm.

Preferably, the rubber sheet of the present invention is one produced by partially crosslinking an unvulcanized rubber sheet after film formation. Specifically, it is desirable that the production method of the present invention to be described hereinunder includes a step (B) of partially crosslinking the rubber sheet formed in the step (A).

Here, "partial crosslinking" means that the gel fraction of the rubber composition formed into a sheet is preferably from 10 to 90% by mass, more preferably from 10 to 85% by mass, even more preferably from 20 to 80% by mass, still more preferably from 25 to 75% by mass.
"Complete crosslinking" means that the gel fraction is more than 90% by mass, and preferably the gel fraction is 92% by mass or more.

When partially crosslinked, the rubber sheet of the present invention becomes a stable solid sheet and the uniformity of the thickness of the sheet is stabilized. In addition, when partially crosslinked, the sheet secures adhesiveness.

The partially crosslinking method may be according to any of electron beam crosslinking, photopolymerization crosslinking and thermal crosslinking.

The gel fraction (toluene insoluble content) of the rubber composition may be determined as follows: About 100 mg of the rubber composition is weighed, immersed in 50 ml of cyclohexane at 23°C for 48 hours, then filtered, the filtration residue is dried at room temperature for 72 hours, and the rubber component is corrected by the ash content (toluene insoluble) such as filler and others in the rubber composition (100% by mass - mass change).

The dynamic shear modulus G' of the partially-crosslinked rubber sheet of the present invention is preferably from 1 × 10³ to 1 × 10⁶ MPa.

The dynamic shear storage elastic modulus G' is measured as follows: Using a viscoelastometer, a partially-crosslinked rubber sheet sample is analyzed at a temperature of 30°C, at a dynamic strain of 0.1% and at a frequency of 10 Hz to measure the dynamic shear storage elastic modulus G' thereof.

When the dynamic shear storage elastic modulus G' of the partially-crosslinked rubber sheet is 1 × 10³ MPa or more, then the rubber sheet can be a stable solid sheet and the uniformity of the thickness of the sheet is stabilized.

When the dynamic shear storage elastic modulus G' of the partially-crosslinked rubber sheet is 10⁶ MPa or less, then the sheet can secure adhesiveness to resin film and rubber members that are adherends to be mentioned below.

The rubber composition of the present invention is finally crosslinked and adhered to rubber members and/or adherends, and therefore preferably contains a crosslinking agent. In addition, in a case where the rubber composition is partially crosslinked through thermal crosslinking or photopolymerization crosslinking, the composition also preferably contains a crosslinking agent.

In a case where the rubber composition of the present invention is thermally crosslinked, the crosslinking agent to be used includes sulfur: sulfur donor compounds such as morpholine disulfide, etc.; organic peroxides such as tertiary butyl hydroperoxide, 1,1,3,3-tetramethylbutyl hydroperoxide, cumene hydroperoxide, diisobutylbenzene hydroperoxide, dicumyl hydroperoxide, di-tert-butyl peroxide, tert-butylcumyl peroxide, etc. Of those, preferred is sulfur.

A vulcanization accelerator for sulfur crosslinking is not specifically defined, including, for example, thiazole-type vulcanization accelerators such as M (2-mercaptobenzothiazole), DM (dibenzothiazolyl disulfide), etc.; sulfenamide-type vulcanization accelerators such as CZ (N-cyclohexyl-2-benzothiazolylsulfenamide), NS (N-tert-butyl-2-benzothiazolylsulfenamide), etc.; guanidine-type vulcanization accelerators such as DPG (1,3-diphenylguanidine), etc. As a vulcanization activator, there are mentioned organic acids such as stearic acid, resin acid, etc.; zinc oxide (zinc flower), etc.

As an organic peroxide crosslinking aid, there are mentioned triallyl cyanurate, m-phenylene dimaleimide, p-quinone dioxime, o,o'-dibenzoyl-p-quinone dioxime, etc.

In case where the rubber composition in the present invention is crosslinked through photopolymerization, the photopolymerization initiator to be used includes isopropyl benzoin ether, isobutyl benzoin ether, benzophenone, Michler's ketone, o-benzoylmethyl benzoate, acetophenone, 2,4-diethylthioxanthone, 2-chlorothioxanthone, ethylanthraquinone, 1-hydroxycyclohexyl phenyl ketone (for example, BASF Japan's Irgacure 184), 2-hydroxy-2-methyl-1-phenyl-propan-1-one (for example, BASF Japan's Darocure 1173), 2,2-dimethoxy-1,2-diphenylethan-1-one (for example, BASF Japan's Irgacure 651), 2-methyl-1-(4-methylthiophenyl)-2-morpholinopropan-1-one (for example, BASF Japan's Irgacure 907), 2-benzyl-2-dimethylamino-1-(4-morpholinophenyl)-butanone-1 (for example, BASF Japan's Irgacure 369), 2,4,6-trimethylbenzoyl-diphenyl-phosphine oxide (for example, BASF Japan's Lucirin TPO), bis(2,4,6-trimethylbenzoyl)-phenylphosphine oxide (for example, BASF Japan's Irgacure 819), methylbenzoyl formate, etc.

In case where UV rays are used for photopolymerization crosslinking, it is desirable that UV rays including those having a wavelength of from 190 to 380 nm are used for irradiation. The UV ray source is not specifically defined, including, for example, high-pressure mercury lamps, low-pressure mercury lamps, metal halide lamps, carbon arc lamps, etc. For photopolymerization crosslinking, the thickness of the rubber sheet is preferably from 1 to 200 µm from the viewpoint of the light permeability thereof.

In case where the rubber composition in the present invention is crosslinked with electron beams, a crosslinking agent is unnecessary. For example, using various types of electron beam accelerators such as a Cockroft-Walton's apparatus, a Van de Graaff generator, a resonance transformer, an insulation core transformer, a straight-line accelerator, a dynamitron acclelerator, a high-frequency accelerator or the like as an electron beam source, the rubber composition may be irradiated with electron beams generally at an accelerating voltage of from 50 to 500 kV and within a range of a dose level of from 5 to 600 kGy.

In case where the rubber composition in the present invention is finally crosslinked and adhered to any other rubber composition, it is desirable that the rubber composition contains the above-mentioned crosslinking agent even in electron beam crosslinking.

Preferably, the rubber composition in the present invention contains a filler, and the filler is preferably carbon black and/or silica.

Containing carbon black and/or silica as a filler, the rubber composition in the present invention may have an increased fracture strength.

In addition to the above-mentioned additives, if desired, any other filler than carbon black and silica, as well as an antiaging agent, a softener and others may be incorporated in the rubber composition in the present invention. The other filler than carbon black and silica includes clay, calcium carbonate; the antiaging agent includes various types of amine-based antiaging agents; the softener includes an aromatic process oil, a naphthene-based process oil, a paraffin-based process oil, etc. In case where silica is incorporated therein, it is desirable that a silane coupling agent is incorporated in the composition.

The silane coupling agent includes, for example, bis(3-triethoxysilylpropyl) disulfide (mean sulfur chain length: 2.35), Evonik's silane coupling agent, trade name "Si75" (registered trademark).

As the adherend to which the rubber sheet of the present invention is adhered, preferably mentioned are resin films and rubber members. The resin film is preferably at least one resin film selected from polyethylene resin films, polypropylene resin films, polyethylene terephthalate resin films, modified ethylene-vinyl alcohol copolymer resin films, polyamide resin films, ethylene-vinyl alcohol copolymer films, styrene-isobutylene-styrene triblock copolymer films, and laminate films of at least one of those resin films and an elastomer layer.

The rubber sheet of the present invention is favorably used as a composite with a resin film and a rubber member, as arranged between the resin film and the rubber member that are adherends.

Accordingly, the resin film and the rubber member can firmly adhere together.

As the rubber member to be an adherend to which the rubber sheet of the present invention is adhered, various types of rubber sheets or various types of extruded rubber articles are favorably mentioned.

In particular, for use for pneumatic tires, there are mentioned a carcass ply coating rubber that is kept in contact with an inner liner, and an interlayer rubber to be between a carcass ply coating rubber and an inner liner.

In particular, in case where a composite of the rubber sheet of the present invention and an adherend is used as a gas barrier film such as an inner liner or the like in a pneumatic tire, it is desirable that the composite is used as a laminate of the rubber sheet of the present invention and an adherend of a resin film.

In this case, an especially preferred embodiment is a combination of a resin film of an inner liner for tires and at least one rubber member selected from a carcass ply coating rubber for tires and an interlayer rubber to be arranged between a carcass ply coating rubber for tires and an inner liner for tires.

Here, it is desirable that the adherend of a resin film functions as an inner liner, and the rubber sheet of the present invention functions as an adhesive for the rubber member such as a carcass ply coating rubber that constitutes the carcass part of a tire or an interlayer rubber between a carcass ply coating rubber and an inner liner, etc.

In case where the resin film of the adherend is used as a gas barrier film such as an inner liner for pneumatic tires or the like, the film may be a single-layer film of a resin selected from an ethylene-vinyl alcohol copolymer (hereinafter this may be abbreviated as "EVOH") and a modified ethylene-vinyl alcohol copolymer (hereinafter this may be abbreviated as "modified EVOH"), or may be a multilayer film of a resin layer selected from EVOH and modified EVOH and a thermoplastic polyurethane (TPU) layer.

The multilayer film is preferred as resistant even to dynamic deformation owing to rolling of pneumatic tires.

The layer configuration of the multilayer film may be a three-layer configuration of TPU layer/resin layer/TPU layer, or an (n+1)-layer configuration of {(TPU layer/resin layer)n/TPU layer}. In this case, n is preferably within a range of from 1 to 40.

For the production method for the multilayer film, for example, there is mentioned the production method described in JP-A2011-105066.

In EVOH for use for the resin film in the present invention, the ethylene content is preferably from 25 to 50 mol% from the viewpoint of satisfying both good folding resistance and fatigue resistance and good gas barrier performance.

For better folding resistance and fatigue resistance, the ethylene content is more preferably 30 mol% or more, even more preferably 35 mol% or more.

Also for better gas barrier performance, the ethylene content is more preferably 48 mol% or less, even more preferably 45 mol% or less.

The modified EVOH is preferably one to be produced by reacting EVOH with an epoxy compound. Concretely, 100 parts by mass of EVOH may be reacted with from 1 to 50 parts by mass, preferably with from 2 to 40 parts by mass, more preferably from 5 to 35 parts by mass of an epoxy compound to give modified EVOH.

Here, the epoxy compound to be reacted with EVOH is preferably a monoepoxy compound.

A di or more polyepoxy compound may crosslink with the ethylene-vinyl alcohol copolymer to generate gels, fish eyes, etc., thereby often worsening the quality of inner liners.

From the viewpoint of easiness in production of modified ethylene-vinyl alcohol copolymer, and gas barrier performance, folding resistance and fatigue resistance thereof, especially preferred are glycidol and epoxypropane among monoepoxy compounds.

For the production method of modified EVOH, for example, there is mentioned the synthesis method described in JP-A2011-105066.

As an EVOH resin, favorably used here is a resin composition prepared by dispersing, in a matrix of a modified EVOH prepared by reacting EVOH with an epoxy compound, a soft resin of which the Young's modulus at 23°C is smaller than that of the modified EVOH.

Using the resin composition improves the level of breaking resistance and cracking resistance in bending.

Of the soft resin, the Young's modulus at 23°C must be lower than that of the modified EVOH, and is preferably 500 MPa or less.

When the Young's modulus is 500 MPa or less, then the modulus of elasticity of the resin film layer may be lowered and, as a result, the folding resistance of the inner liner may be thereby enhanced.

In addition, the soft resin preferably has a functional group capable of reacting with a hydroxyl group. When the soft resin has a functional group capable of reacting with a hydroxyl group, then modified EVOH can be uniformly dispersed in the soft resin.

Here, the functional group capable of reacting with a hydroxyl group includes a maleic anhydride residue, a hydroxyl group, a carboxyl group, an amino group, etc.

Concretely, the soft resin having such a functional group capable of reacting with a hydroxyl group includes a maleic anhydride-modified hydrogenated styrene-ethylene-butadiene-styrene block copolymer, a maleic anhydride-modified ultra-low-density polyethylene, etc. Further, the mean particle size of the soft resin is preferably 2 µm or less.

When the mean particle size of the soft resin is 2 µm or less, then the folding resistance of the resin film layer may be fully enhanced, and therefore the inner pressure retention capacity of tires can be thereby favorably maintained without worsening the gas barrier performance.

The mean particle size of the soft resin in the resin composition may be determined, for example, by freezing a sample of the composition, slicing the sample into sections with a microtome and observing the section with a transmission electronic microscope (TEM).

Here, the content of the soft resin in the resin composition is preferably within a range of from 10 to 80% by mass.

When the soft resin content is 10% by mass or more, then the effect of improving the folding resistance can be favorably exhibited; and when 80% by mass or less, then the gas barrier performance can be favorably prevented from worsening.

As the thermoplastic polyurethane (TPU) for use in the multilayer film in the resin film, for example, preferred is Kuraray's trade name "Kuramiron 3190".

The pneumatic tire of the present invention has a composite of a resin film and a rubber member in which the rubber sheet of the present invention is arranged between the resin film and the rubber member, and consequently, the resin film well adheres to the rubber member, therefore providing excellent durability.

Next described is a method for producing the rubber sheet of the present invention.

The production method for the rubber sheet of the present invention is a method for producing a rubber sheet having a thickness of 500 µm or less, and preferably includes a step (A) of forming a film of a rubber composition in which the content of an organic compound having a boiling point not higher than 150°C is 5% by mass or less, especially a rubber composition not containing an organic compound having a boiling point not higher than 150°C, on a substrate sheet at a temperature at which the viscosity of the rubber composition falls within a range of from 10 to 100000 mPa·s.

This is because, when the viscosity of the rubber composition is 10 mPa·s or more, then it secures a sufficient thickness capable of functioning as a rubber sheet, and when 100000 mPa·s or less, the composition can be favorably applied to the substrate.

The viscosity of the rubber composition in film formation is preferably from 50 to 50000 mPa·s, more preferably from 100 to 50000 mPa·s, even more preferably from 500 to 50000 mPa·s.

The temperature in film formation and the viscosity in film formation of the rubber composition in the step (A) in the rubber sheet production method of the present invention mean the temperature and the viscosity of the coating liquid of the rubber composition in coating according to the above-mentioned coating method and the coextrusion method.

The rubber sheet production method of the present invention favorably provides a thin-film rubber sheet that is used as arranged between a resin film and a rubber member to thereby adhere the resin film and the rubber member.

The rubber composition in the production method of the present invention preferably does not contain an organic compound having a boiling point not higher than 150°C, and this is for the purpose of preventing generation of volatile organic compounds (VOC).

The thickness of the rubber sheet in the production method of the present invention is as described above.

In the step (A), the temperature in film formation of the rubber composition is preferably from 10 to 80°C. Within the temperature range, film formation is favorably easier not using any special coating apparatus.

In particular, the range is preferred since the substrate sheet is not too hard or not too soft in film formation thereon with the rubber composition.

The step (A) in the production method of the present invention is a film formation step of applying the rubber composition onto a substrate sheet such as a resin sheet, a metal belt or the like. The coating method on the substrate sheet surface is not specifically defined, for which, for example, employable is any known coating method of dip coating, roll coating, knife coating (air knife coating, roll knife coating), blade coating, bar coating, doctor coating, slot die coating, reverse coating, curtain coating, die coating, slit coating or the like, as well as a coextrusion method such as a T-die method (casting method), etc.

In the production method of the present invention, it is desirable that the rubber composition does not contain an organic compound having a boiling point not higher than 150°C. When the composition does not contain an organic compound having a boiling point not higher than 150°C, the method does not always require a drying step after the step (A). However, for stabilizing the surface condition of the rubber composition, a drying step may be provided after the step (A).

Preferably, the production method of the present invention includes a step (B) of partially crosslinking the rubber sheet formed in the previous step (A). Via the partially crosslinking step (B), the rubber sheet can be a stable solid sheet, and the uniformity of the thickness of the sheet can be stabilized.

The rubber composition for use in the production method of the present invention preferably contains a liquid elastomer having a weight-average molecular weight of from 500 to 100000. Containing such a liquid elastomer, it is easy to prepare a rubber composition having a viscosity of from 10 to 100000 mPa·s.

The preferred range of the weight-average molecular weight of the liquid elastomer, the method for measuring the weight-average molecular weight, the content of the liquid elastomer in the rubber composition and specific examples of the liquid elastomer are as described above.

In the step (A) in the production method of the present invention, the substrate sheet on which a film of the rubber composition is to be formed is preferably a resin sheet. This is because a resin sheet is flexible.

Using a resin film as the resin sheet has another advantage of direct production of a composite of the resin film and a rubber sheet.

In the step (A) in the present invention, using an adherend of the resin film as the substrate sheet is preferred since a composite of a rubber composition and the adherend can be produced directly in the step (A).

In a case where a rubber sheet is used singly or in a case where a rubber sheet is laminated with a different resin film or the like and when a lubricant is previously applied to the surface of the substrate sheet in such a case, then the rubber sheet can be readily peeled away from the substrate sheet.

The thickness of the substrate sheet is preferably from 10 to 200 µm.

In the step (A) in the production method of the present invention, the resin sheet usable as the substrate sheet is not specifically defined. For example, in a case where a single-layer sheet is used, there are mentioned polyolefin resin sheets such as polyethylene resin sheets, polypropylene resin sheets, etc.; polyester resin sheets such as polybutylene terephthalate resin sheets, polyethylene terephthalate resin sheets, polyethylene naphthalate resin sheets, etc.; polyamide resin sheets such as 6-nylon sheets, 6,6-nylon sheets, etc.; other resin sheets such as ethylene-vinyl alcohol copolymer (EVOH) resin sheets, modified ethylene-vinyl alcohol copolymer (modified EVOH) resin sheets, polyether imide resin sheets, acetate resin sheets, polystyrene resin sheets, vinyl chloride resin sheets, etc.; styrene-isobutylene-styrene triblock copolymer sheets, as well as films softened as laminate films of at least one of those resin sheets and an elastomer layer. Of those, preferred are polyester resin sheets such as polyethylene terephthalate resin sheets, polyethylene naphthalate resin sheets, etc., polyether imide resin sheets, polypropylene resin sheets (CPP, OPP), ethylene-vinyl alcohol copolymer resin sheets, styrene-isobutylene-styrene triblock copolymer sheets, and films softened as laminate films of at least one of those resin sheets and an elastomer layer. More preferred are polyethylene terephthalate resin sheets, polyamide resin sheets, ethylene-vinyl alcohol copolymer resin sheets, styrene-isobutylene-styrene triblock copolymer sheets, and films softened as laminate films of at least one of those resin sheets and an elastomer layer.

The materials of these films preferably have a glass transition temperature of 70°C or higher. Also preferably, these resin sheets have a small thermal shrinkage. Concretely, the thermal shrinkage at 150°C is preferably 3% or less, more preferably 1.5% or less.

The resin sheet for use as the substrate sheet may be unstretched, but is more preferably a film stretched in the monoaxial direction or in the biaxial direction such as longitudinally or laterally, as having good dimensional stability.

For preventing blocking, the surface of the resin sheet must have good lubricity, and for this, it is desirable that the surface is processed for lubricity improvement.

The treatment for lubricity improvement includes, for example, sand matting, kneading matting, chemical matting, etc. Regarding the degree of lubricity, it is suitable that the dynamic friction coefficient of the sheet surface (to a polyurethane resin sheet), as measured according to JIS K7125, is from 3 to 10.

In the step (A) in the present invention, using an adherend of the resin film as the substrate sheet is preferred since a composite of a rubber composition and the adherend can be produced directly in the step (A).

In addition, the laminate film of the resin film and an elastomer layer can be a softened film, and therefore using it as an adherend is preferred as resistant to static and dynamic deformation.

### Examples

The present invention is described in more detail with reference to the following Examples; however, the present invention is not limited at all by the following Examples.

### [Evaluation Methods]

### <Viscosity of Rubber Composition (mPa·s)>

Measured according to JIS K 7117-2:1999.

### <Gel Fraction>

Evaluated according to the method described in the specification.

### <Modulus of Elasticity after partial crosslinking G' (MPa)>

Using a viscoelastometer (by Rheometric), a partially-crosslinked rubber sheet sample was analyzed at a temperature of 30°C, at a dynamic strain of 0.1% and at a frequency of 10 Hz to measure the dynamic shear storage elastic modulus G' thereof.

### <Adhesiveness to Rubber Member (a), (b) or (c), or to Adherend>

A three-layer composite was prepared in which a rubber sheet was sandwiched between a rubber member (a) or (b) and a resin film, and after crosslinked, the adhesiveness of the composite was evaluated according to the adhesion test method of JIS K6256:1999 (peeling test of cloth and vulcanized rubber), and according to the following criteria.

The peeling test was applied to both the interface between the rubber member (a) or (b) and the rubber sheet and the interface between the resin film and the rubber sheet.

Similarly, the adhesiveness of the crosslinked composite of the rubber sheet and the rubber member (c), or the adhesiveness of the crosslinked composite of the rubber sheet and the resin film was evaluated according to the adhesion test method of JIS K6256:1999 (peeling test of cloth and vulcanized rubber), and according to the following criteria.
○: No peeling occurred at the interface between the rubber sheet and the rubber member (a), (b) or (c) and the rubber sheet, or no peeling occurred at the interface between the resin film and the rubber sheet, and the adhesiveness was judged as good.
×: Peeling occurred at the interface between the rubber sheet and the rubber member (a), (b) or (c) and the rubber sheet, or peeling occurred at the interface between the resin film and the rubber sheet, and the adhesiveness was judged as low.

### Production Example 1

### Production of Resin Film for Use as Adherend (hereinafter abbreviated as "EVOH film")

Using EVOH [Kuraray's trade name "E105"] and thermoplastic polyurethane (TPU) [Kuraray's trade name "Kuramiron 3190"], and using a 2-type 21-layer coextruder, a 21-layer film (TPU layer/EVOH layer ... EVOH layer/TPU layer, in which the number of the TPU layers was 11 and the number of the EVOH layer was 10, and the EVOH layer and the TPU layer were arranged alternately) was produced under the coextrusion condition mentioned below. Regarding the thickness of each layer, the TPU layer was 2 µm thick and the EVOH layer was 1 µm thick.

The multilayer film composed of 21 layers was extruded out at a multilayer feed block temperature of 210°C and at a die temperature of 208°C. Extruder Specification for Resin:
Thermoplastic polyurethane: 25 mmφ extruder "P25-18AC" [by Osaka Seiki Kousaku]
EVOH: 20 mmφ extruder laboratory ME model "CO-EXT" [by Toyo Seiki]
T-die Specification: for 500 mm width 2-type 21-layer film [by Plastic Engineering Laboratory]
Temperature of Chill Roll: 50°C
Take-up Speed: 4 m/min

### Examples 1 to 6

According to the formulation shown in Table 1, the ingredients were kneaded with a bead mill and a stir mill by Ashizawa Finetech, thereby preparing 6 types of rubber composition for use for rubber sheets of Examples 1 to 6.

Next, using a knife coater (by Yasui Seiki], the composition was applied onto a substrate sheet for film formation thereon according to the production condition shown in Table 1.

The viscosity of the rubber composition was measured at the temperature in film formation, according to JIS K 7117-2:1999. In all of Examples 1 to 6, a polyethylene terephthalate resin sheet having a thickness of 38 µm and coated with a lubricant (Fujimori Industry's trade name "NO. 23", hereinafter abbreviated as "lubricated PET sheet") was used as the substrate sheet.

Next, using Nisshin High-Voltage's Curetron, the lubricated PET sheet of Examples 1 to 3 and 6 and the rubber composition sheet (hereinafter referred to as "two-layer sheet") were irradiated with electron beams for partial crosslinking, at an accelerating voltage of 200 kV and at an irradiation dose of 100 kGy in Examples 1 to 3, but at an accelerating voltage of 200 kV and at an irradiation dose of 150 kGy in Example 6.

The two-layer sheet of Example 4 was partially crosslinked in a dry furnace at 140°C for 10 minutes. Further, the two-layer sheet of Example 5 was partially crosslinked through UV irradiation at 1000 mJ/cm².

In those six types of two-layer sheets, the rubber sheet was peeled from the lubricated PET sheet, and the thickness of the rubber sheet and the modulus of elasticity after partial crosslinking thereof G' (MPa) were measured. The results are shown in Table 1.

Next, a 6-nylon film having a thickness of 30 µm (Ube Industries' trade name "Ube Nylon 1030B") was laminated on the rubber sheet of Example 1, then the lubricated PET sheet was peeled off, and thereafter the rubber member (a) having a thickness of 2 mm and shown in Table 2 was laminated on the rubber sheet to prepare a 3-layer composite of 6-nylon film/rubber sheet/rubber member (a).

Similarly, the EVOH film produced in Production Example 1 was laminated on the rubber sheet of Examples 2, 4 and 5, then the lubricated PET sheet was peeled off, and thereafter the rubber member (a) having a thickness of 2 mm and shown in Table 2 was laminated on the rubber sheet to prepare a 3-layer composite of EVOH film/rubber sheet/rubber member (a).

Further, the EVOH film produced in Production Example 1 was laminated on the rubber sheet of Example 3, then the lubricated PET sheet was peeled off, and thereafter the rubber member (b) having a thickness of 2 mm and shown in Table 2 was laminated on the rubber sheet to prepare a 3-layer composite of EVOH film/rubber sheet/rubber member (b).

Similarly, a styrene-isobutylene-styrene triblock copolymer (hereinafter abbreviated as "SIBS") film having a thickness of 30 µm was laminated on the rubber sheet of Example 6, then the lubricated PET sheet was peeled off, and thereafter the rubber member (a) having a thickness of 2 mm and shown in Table 2 was laminated on the rubber sheet to prepare a 3-layer composite of SIBS/rubber sheet/rubber member (a).

As the SIBS film, used here was Kaneka's "SIBSTAR 102T" (styrene-isobutylene-styrene triblock copolymer, weight-average molecular weight 100,000, styrene unit content 25 mass%, Shore A hardness 25).

Next, those 6 types of composites each having the rubber sheet of Examples 1 to 6 were crosslinked at 160°C for 15 minutes, and then according to the above-mentioned method, both the resin film/rubber sheet interface and the rubber member/rubber sheet interface were evaluated for the adhesiveness thereof. The evaluation results are shown in Table 1.

In addition, each rubber sheet of the four types of two-layer sheets of Examples 1, 4, 5 and 6 was stuck to the rubber member (c) having a thickness of 2 mm and shown in Table 2, then the lubricated PET sheet was peeled off, and the resultant composite was crosslinked at 160°C for 15 minutes, and as a result, all the composites of the rubber sheet and the rubber member of Examples 1, 4, 5 and 6 were confirmed to have a good adhesion force. The evaluation results are shown in Table 1 as "Adhesiveness between Rubber Sheet and Rubber Member (c)".

Next, the rubber sheet of Example 1 was laminated on the above-mentioned 6-nylon film having a thickness of 30 µm, the rubber sheet of Examples 4 and 5 was laminated on the EVOH film produced in Production Example 1, the rubber sheet of Example 6 was laminated on the SIBS film having a thickness of 30 µm, and thereafter these were crosslinked at 160°C for 15 minutes. As a result, all the composites of the rubber sheet and the resin film of Examples 1, 4, 5 and 6 were confirmed to have a good adhesion force.

The evaluation results are shown in Table 1 as "Adhesiveness between Rubber Sheet and Resin Film".

[Table 1]

**Table 1**

| part by mass | | Examples | | | | | |
|---|---|---|---|---|---|---|---|
| | | 1 | 2 | 3 | 4 | 5 | 6 |
| Formulation of Rubber Composition for Sheet | Liquid Polyisoprene *1 | 80 | 80 | 80 | - | - | - |
| | Liquid Polyisoprene *2 | - | - | - | - | 50 | - |
| | Liquid Polybutadiene *3 | - | - | - | 50 | 30 | - |
| | Liquid Styrene-Butadiene Random Copolymer *4 | - | - | - | - | - | 90 |
| | NR *5 | 20 | 20 | 20 | - | 20 | - |
| | E-NR50 *6 | - | - | - | 50 | - | 10 |
| | Silica*7 | - | - | - | - | 10 | - |
| | Silane Coupling Agent 8* | - | - | - | - | 0.5 | - |
| | Carbon black GPF *9 | 10 | 10 | 10 | 10 | 10 | 8 |
| | Process Oil *10 | 20 | 20 | 20 | 10 | 15 | 20 |
| | Stearic Acid *11 | 2 | 2 | 2 | 2 | 2 | 2 |
| | Vulcanization Accelerator DM *12 | 1.3 | 1.3 | 1.3 | 1.3 | 1.3 | 1.3 |
| | Zinc Oxide *13 | 2.5 | 2.5 | 2.5 | 2.5 | 2.5 | 2.5 |
| | Sulfur *14 | 1 | 1 | 1 | 1 | 1 | 1 |
| | Peroxide Compound *15 | - | - | - | 1 | - | - |
| | Photopolymerization Initiator *16 | - | - | - | - | 1.3 | - |
| | Curing Agent *17 | - | - | - | 10 | 8 | 20 |
| Production Condition | | | | | | | |
| Temperature in Film Formation | | 60 | 60 | 60 | 30 | 60 | 60 |
| Viscosity in Film Formation (melt viscosity) (mPa·s) | | 20000 | 20000 | 20000 | 3000 | 30000 | 35000 |
| Drying Furnace Temperature (°C) × Time (min) | | - | - | - | 140°C × 10 min | - | - |
| UV Irradiation Dose (mJ/cm²) | | - | - | - | - | 1000 | - |
| EB Irradiation Dose (kGy) | | 100 | 100 | 100 | - | - | 150 |
| Substrate Sheet | | Lubricated PET Sheet | Lubricated PET Sheet | Lubricated PET Sheet | Lubricated PET Sheet | Lubricated PET Sheet | Lubricated PET Sheet |
| Adherend | Resin Film | 6-Nylon Film | EVOH Film | EVOH Film | EVOH Film | EVOH Film | SIBS Film |
| | Rubber Member | Rubber Member (a) | Rubber Member (a) | Rubber Member (b) | Rubber Member (a) | Rubber Member (a) | Rubber Member (a) |
| Properties of Rubber Sheet | | | | | | | |
| Thickness (µm) | | 200 | 200 | 200 | 400 | 10 | 100 |
| Gel Fraction (%) | | 70 | 70 | 70 | 80 | 65 | 85 |
| Modulus of Elasticity after partial crosslinking G' (MPa) | | 7.48 × 10⁴ | 7.48 × 10⁴ | 7.48 × 10⁴ | 1.58 × 10⁵ | 2.48 × 10⁴ | 3.65 × 10⁵ |
| Three-Layer Composite | Adhesiveness to Resin Film | ○ | ○ | ○ | ○ | ○ | ○ |
| | Adhesiveness to Rubber Member (a) or (b) | (a) ○ | (a) ○ | (b) ○ | (a) ○ | (a) ○ | (a) ○ |
| Adhesiveness between Rubber Sheet and Resin Film | | ○ | - | - | ○ | ○ | ○ |
| Adhesiveness between Rubber Sheet and Rubber Member (c) | | ○ | - | - | ○ | ○ | ○ |

| | | | | | | | |
|---|---|---|---|---|---|---|---|
| [Notes] *1: Kuraray's trade name "Kuraprene UC-102" {weight-average molecular weight: 17000, viscosity (38°C): 30 Pa·s} (according to measurement method: JIS K 7117-2:1999) *2: Kuraray's trade name "Kuraprene LIR-50" {weight-average molecular weight: 54000, viscosity (38°C): 500 Pa·s} (according to measurement method: JIS K 7117-2:1999) *3: Kuraray's trade name "Kuraprene LBR-307" {weight-average molecular weight: 8000, viscosity (38°C): 1.5 Pa·s} (according to measurement method: JIS K 7117-2:1999) *4: Kuraray's trade name "Kuraprene L-SBR-820" {weight-average molecular weight: 8000, viscosity (38°C): 350 Pa·s} (according to measurement method: JIS K 7117-2:1999) *5: Natural Rubber, trade name "TSR20" *6: Epoxidated Natural Rubber, Muang Mai Guthrie Public Company Limited's trade name "EPOXYPRENE 50" *7: Evonik's trade name "Ultrasil VN3" (registered trademark) *8: Evonik's silane coupling agent, trade name "Si75" (registered trademark) *9: Carbon Black GPF, Asahi Carbon's trade name "#55" (registered trademark) *10: Idemitsu Kosan's trade name "Diana Process Oil PW-380" (registered trademark) *11: by Asahi Denka Industry *12: Di-2-benzothiazolyl disulfide, Ouchi Shinko Chemical's trade name "Nocceler DM" (registered trademark) *13: by Hakusui Chemical *14: by Karuizawa Refinery *15: 2,5-Dimethyl-2,5-di(t-butylperoxy)hexane, Kayaku Akzo's trade name "Trigonox 101-40MB" (registered trademark) *16: 1-Hydroxy-cyclohexyl phenyl ketone, BASF Japan's trade name "IRGACURE-184" (registered trademark) *17: Polyfunctional Methacrylate (trimethylolpropane trimethacrylate), Shin-Nakamura Chemical Industry's trade name "TMPT" (registered trademark) | | | | | | | |

[Table 2]

**Table 2**

| Formulation (part by mass) | Rubber Member (a) | Rubber Member (b) | Rubber Member (c) |
|---|---|---|---|
| NR *5 | 100 | 100 | 100 |
| Carbon black GPF *9 | 50 | - | 50 |
| Carbon black HAF *18 | - | 50 | - |
| Antiaging Agent 6PPD *19 | 1 | 1 | - |
| Stearic Acid *11 | 2 | 2 | 2 |
| Zinc Oxide *13 | 2.5 | 3 | 2.5 |
| Vulcanization Accelerator DM *12 | 0.5 | - | 0.5 |
| Vulcanization Accelerator NS *20 | 1 | 1 | 1 |
| Sulfur *14 | 2.5 | 3 | 2.5 |

| | | | |
|---|---|---|---|
| [Notes] *1 to *13 are the same as in Table 1. *18: Carbon Black HAF, Asahi Carbon's trade name "#70" (registered trademark) *19: N-(1,3-dimethylbutyl)-N'-phenyl-p-phenylenediamine, by Ouchi Shinko Chemical, trade name "Nocrac 6C" (registered trademark) *20: N-tert-butyl-2-benzothiazolylsulfenamide, Sanshin Chemical's trade name "Sanceler NS" (registered trademark) | | | |

As obvious from Table 1, the rubber sheets of the present invention and the rubber sheets produced according to the production method of the present invention can be extremely thin sheets without using an organic solvent, and when the rubber sheet of the present invention is arranged between adherends of the resin film and the rubber member, then the adhesiveness to the adherend, resin film and the adhesiveness to the rubber member can be bettered.

### Examples 7 to 12

Next, using a carcass ply coating film member having the formulation of the rubber member (b), and an interlayer rubber member between a carcass ply coating rubber having the formulation of the rubber member (a) and an inner liner, produced were radial tires for passenger cars having a tire size of 225/60 R16 of Examples 7 to 12.

In Example 7, the above-mentioned 6-nylon film having a thickness of 30 µm was used as the inner liner, and the rubber sheet of Example 1 was arranged between the interlayer rubber member and the inner liner, 6-nylon film.

Similarly, in Examples 8 to 11, the EVOH film produced in Production Example 1 was used as the inner liner, and the rubber sheets of Examples 2 to 5, respectively, were arranged between the interlayer rubber member and the inner liner, EVOH film. Similarly, in Example 12, the above-mentioned SIBS film was used as the inner liner, and the rubber sheet of Example 6 was arranged between the interlayer rubber member and the inner liner, SIBS film.

The tires of Examples 7 to 12 were produced according to an ordinary method, and then according to the above-mentioned method, both the adhesiveness at the interface of (6-nylon film, EVOH film or SIBS film)/rubber sheet, and the adhesiveness at the interface of interlayer rubber member/rubber sheet were evaluated. As a result, all the radical tires for passenger cars of Examples 7 to 12 exhibited good adhesiveness.

### INDUSTRIAL APPLICABILITY

The rubber sheet of the present invention and the rubber sheet produced according to the production method of the present invention are favorably used for various rubber products such as tires, hoses, belt conveyors, rubber dams, etc. In particular, the laminate of the rubber sheet and a resin film having good gas barrier performance is favorably used as an inner liner for pneumatic tires.

Preferred examples of the pneumatic tires include those for passenger cars, small trucks, minivans, lightweight trucks and large-sized vehicles {for trucks, buses, off-the-road tires (for construction vehicles, mine vehicles, etc.)}, etc.

## Claims

1. A rubber sheet having a thickness of 500 µm or less, wherein a rubber component in a rubber composition to constitute the rubber sheet contains a liquid elastomer having a weight-average molecular weight of from 500 to 100000.

2. The rubber sheet according to claim 1, wherein the content of an organic compound having a boiling point not higher than 150°C in the rubber composition is 5% by mass or less.

3. The rubber sheet according to claim 1 or 2, wherein the rubber component contains the liquid elastomer in an amount of from 10 to 90% by mass.

4. The rubber sheet according to any of claims 1 to 3, wherein the liquid elastomer is a dienic liquid elastomer.

5. The rubber sheet according to claim 4, wherein the dienic liquid elastomer is at least one dienic liquid elastomer selected from a liquid styrene-butadiene random copolymer, a liquid styrene-butadiene block copolymer, a liquid polybutadiene, a liquid polyisoprene and a depolymerized natural rubber.

6. The rubber sheet according to any of claims 1 to 5, wherein the rubber composition contains a crosslinking agent.

7. The rubber sheet according to claim 6, wherein the crosslinking agent is sulfur.

8. The rubber sheet according to any of claims 1 to 7, wherein the rubber composition contains a filler, and the filler is carbon black and/or silica.

9. The rubber sheet according to any of claims 1 to 8, wherein the rubber sheet is partially crosslinked.

10. The rubber sheet according to claim 9, wherein the dynamic shear modulus G' of the partially-crosslinked rubber sheet is from 1 × 10³ to 1 × 10⁶ MPa.

11. A composite of a resin film and a rubber member, wherein the rubber sheet according to any of claims 1 to 10 is arranged between the resin film and the rubber member.

12. The composite of a resin film and a rubber member according to claim 11, wherein the resin film is at least one resin film selected from polyethylene resin films, polypropylene resin films, polyethylene terephthalate resin films, modified ethylene-vinyl alcohol copolymer resin films, polyamide resin films, ethylene-vinyl alcohol copolymer films, and laminate films of at least one of those resin films and an elastomer layer.

13. The composite of a resin film and a rubber member according to claim 11 or 12, wherein the resin film is an inner liner for tires.

14. The composite of a resin film and a rubber member according to any of claims 11 to 13, wherein the rubber member is at least one rubber member selected from a carcass ply coating rubber for tires and an interlayer rubber to be arranged between a carcass ply coating rubber for tires and an inner liner for tires.

15. A pneumatic tire having the composite of a resin film and a rubber member according to any of claims 11 to 14.

16. A method for producing a rubber sheet having a thickness of 500 µm or less,
which includes a step (A) of forming a film of a rubber composition not containing an organic compound having a boiling point not higher than 150°C, on a substrate sheet at a temperature at which the viscosity of the rubber composition falls within a range of from 10 to 100000 mPa·s.

17. The method for producing a rubber sheet according to claim 16, wherein in the step (A), the temperature in film formation of the rubber composition is from 10 to 80°C.

18. The method for producing a rubber sheet according to claim 16 or 17, which includes a step (B) of partially crosslinking the sheet formed in the previous step (A).

19. The method for producing a rubber sheet according to any of claims 16 to 18, wherein the rubber composition contains a liquid elastomer having a weight-average molecular weight of from 500 to 100000.

20. The method for producing a rubber sheet according to claim 19, wherein the rubber composition contains the liquid elastomer in an amount of from 10 to 90% by mass.

21. The method for producing a rubber sheet according to claim 19 or 20, wherein the liquid elastomer is a dienic liquid elastomer.

22. The method for producing a rubber sheet according to claim 21, wherein the dienic liquid elastomer is at least one dienic liquid elastomer selected from a liquid styrene-butadiene random copolymer, a liquid styrene-butadiene block copolymer, a liquid polybutadiene, a liquid polyisoprene and a depolymerized natural rubber.

23. The method for producing a rubber sheet according to any of claims 16 to 22, wherein the rubber composition contains a crosslinking agent.

24. The method for producing a rubber sheet according to claim 23, wherein the crosslinking agent is sulfur.

25. The method for producing a rubber sheet according to any of claims 16 to 24, wherein the rubber composition contains a filler, and the filler is carbon black and/or silica.

26. The method for producing a rubber sheet according to any of claims 16 to 25, wherein in the step (A), the substrate sheet is a resin sheet.

27. The method for producing a rubber sheet according to claim 26, wherein the resin sheet is a resin sheet selected from polyolefin resin sheets, polyester resin sheets, polyamide resin sheets, ethylene-vinyl alcohol copolymer resin sheets, modified ethylene-vinyl alcohol copolymer resin sheets, polyether imide resin sheets, acetate resin sheets, polystyrene resin sheets, vinyl chloride resin sheets, and laminate films of at least one of those resin sheets and an elastomer layer.
